Europäisches Patentamt

European Patent Office

Office européen des brevets

(11) Veröffentlichungsnummer: **0 645 698 A1**

## (12) EUROPÄISCHE PATENTANMELDUNG

(21) Anmeldenummer: **94202671.7**

(51) Int. Cl.6: **G06F 7/52**

(22) Anmeldetag: **16.09.94**

(30) Priorität: **25.09.93 DE 4332659**

(43) Veröffentlichungstag der Anmeldung:
**29.03.95 Patentblatt 95/13**

(84) Benannte Vertragsstaaten:
**DE FR GB**

(71) Anmelder: **Philips Patentverwaltung GmbH
Wendenstrasse 35c
D-20097 Hamburg (DE)**

(84) **DE**

(71) Anmelder: **PHILIPS ELECTRONICS N.V.
Groenewoudseweg 1
NL-5621 BA Eindhoven (NL)**

(84) **FR GB**

(72) Erfinder: **Sauvagerd, Ulrich, Dr., c/o Philips
Patentverwaltung GmbH,
Wendenstrasse 35c
D-20097 Hamburg (DE)**

(74) Vertreter: **Poddig, Dieter, Dipl.-Ing.
Philips Patentverwaltung GmbH
Wendenstrasse 35c
D-20097 Hamburg (DE)**

(54) **Schaltungsanordnung zum Erzeugen eines Quotienten.**

(57) Die erfindungsgemäße Dividierschaltung ist insbesondere geeignet für Dualwerte und enthält einen Multiplizierer, einen Addierer bzw. Subtrahierer sowie einen Integrator, die einen geschlossenen Signalkreis bilden. Die Eingangssignale werden einem zweiten Eingang des Multiplizierers bzw. des Addierers zugeführt und das Ausgangssignal entsteht am Ausgang des Integrators. Eine solche Schaltung läßt sich besonders günstig mit einem digitalen Signalprozessor realisieren und hat für bestimmte, weite Wertebereiche der Eingangssignale ein gutes Einschwingverhalten, so daß sie auch für zeitvariable Eingangssignale geeignet ist.

FIG. 1

EP 0 645 698 A1

Die Erfindung betrifft eine Schaltungsanordnung zum Erzeugen eines Ausgangssignals an einem Ausgangsanschluß, das im wesentlichen dem Quotienten eines ersten und eines zweiten Eingangssignals an einem ersten und einem zweiten Eingangsanschluß entspricht, mit einem Multiplizierer, von dem ein erster Eingang mit dem ersten Eingangsanschluß und ein zweiter Eingang mit dem Ausgangsanschluß gekoppelt ist, und einer Kombinierstufe mit zwei Eingängen, von denen der eine Eingang mit einem Ausgang des Multiplizierers und der andere Eingang mit dem zweiten Eingangsanschluß gekoppelt ist zum Bilden der Differenz zwischen den Signalen an beiden Eingängen.

Eine derartige Schaltungsanordnung, die auch als Dividierschaltung bezeichnet wird, ist aus dem Buch von U. Tietze, Ch. Schenk "Halbleiter-Schaltungstechnik", 8. Auflage, Springer-Verlag 1986, Seiten 344 und 345 bekannt. Diese Schaltung ist für analoge Signale beschrieben, und die Kombinierstufe ist dabei als Operationsverstärker ausgebildet, der also die Differenz der Signale an seinen beiden Eingängen mit sehr hoher Verstärkung erzeugt. Abgesehen von gewissen Nachteilen von Operationsverstärkern ist diese bekannte Schaltung nicht ohne weiteres auf die Verarbeitung von Dualwerten übertragbar, die durch mehrere Binärsignale dargestellt sind. Für solche Dualwerte ist nämlich ein Operationsverstärker nicht ohne weiteres bzw. nur mit hohem Aufwand nachbildbar.

Aufgabe der Erfindung ist es daher, eine Schaltung der eingangs genannten Art anzugeben, die auch für die Verarbeitung von Dualwerten aus mehreren Binärsignalen mit geringem Aufwand verwendbar ist.

Diese Aufgabe wird erfindungsgemäß dadurch gelöst, daß die Kombinierstufe als ein erster Addierer ausgebildet ist, dessen Ausgang mit einem Eingang eines Integrators verbunden ist, wobei ein Ausgang des Integrators mit dem Ausgangsanschluß (9) gekoppelt ist.

Bei dieser erfindungsgemäßen Lösung wird also anstelle des Operationsverstärkers der bekannten Schaltung ein Addierer verwendet, der unmittelbar und ohne Verstärkung die Differenz zwischen dem Ausgangssignals des Multiplizierers und dem zweiten Eingangssignal bildet. Diese Differenz wird nun einem Integrator zugeführt, der in einer geschlossenen Signalschleife angeordnet ist, so daß im eingeschwungenen Zustand das Signal am Eingang des Integrators Null ist.

Ein solcher Integrator kann für digitale Signale leicht aufgebaut werden. Eine Ausgestaltung der erfindungsgemäßen Schaltungsanordnung, wobei das Ausgangssignal und die Eingangssignale durch mehrere Binärsignale dargestellte Dualwerte sind, ist dadurch gekennzeichnet, daß der Integrator einen zweiten Addierer, von dem ein erster Eingang mit dem Eingang des Integrators und ein zweiter Eingang mit dem Ausgang des Integrators verbunden ist, und einen taktgesteuerten Speicher zur Aufnahme der Binärsignale eines Dualwertes enthält, von dem ein Eingang mit einem Ausgang des zweiten Addierers und ein Ausgang mit dem Ausgang des Integrators verbunden ist. Die Taktfrequenz des Taktsignals für den taktgesteuerten Speicher beeinflußt dabei die Zeitdauer, in der nach dem Zuführen der Eingangssignale das Ausgangssignal mit einer vorgegebenen Genauigkeit den Quotienten der beiden Eingangssignale erreicht hat, wobei vorausgesetzt ist, daß die Verarbeitungsgeschwindigkeit der übrigen Elemente ausreichend hoch gegenüber der Taktperiode ist.

Die erfindungsgemäße Schaltung ist nicht auf die Verarbeitung von stationären Signalen beschränkt, sondern es können auch langsam sich ändernde Eingangssignale verarbeitet werden, sofern der höchste Frequenzanteil in den Eingangssignalen genügend klein gegenüber der Taktfrequenz ist, abhängig von der gewünschten Genauigkeit des Quotienten sowie auch der Werte der Eingangssignale im Verhältnis zu den maximal verarbeitbaren Signalwerten.

Die erfindungsgemäße Schaltung kann auch besonders günstig durch einen digitalen Signalprozessor realisiert werden, der einen digitalen Parallel-Multiplizierer enthält, da für einen Verarbeitungszyklus der Schaltung entsprechend der Taktfrequenz des taktgesteuerten Speichers nur wenige Befehle notwendig sind, um die Multiplikation, die Additionen und die Abspeicherung im Speicher durchzuführen.

Ausführungsbeispiele der Erfindung werden nachstehend anhand der Zeichnung erläutert. Es zeigen

Fig. 1 ein Blockschaltbild einer erfindungsgemäßen Anordnung,

Fig. 2 das Blockschaltbild eines Integrators für Dualwerte.

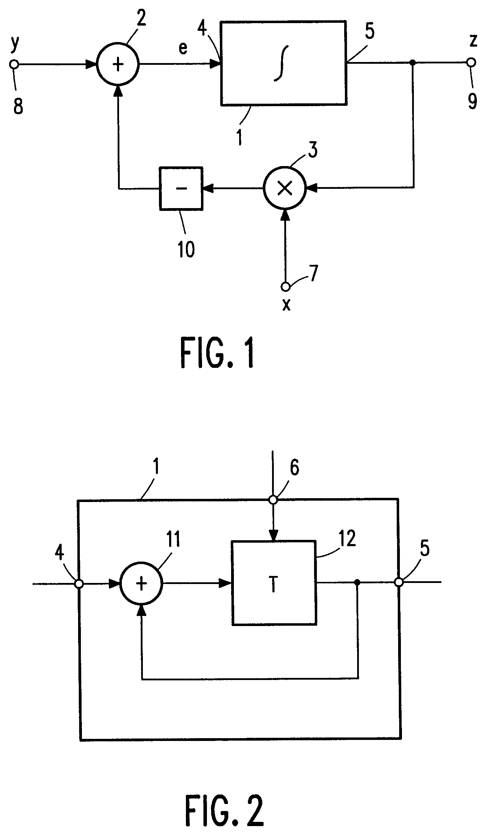

Das Blockschaltbild in Fig. 1 zeigt einen Integrator 1, einen Multiplizierer 3 und einen Addierer 2, wobei der Ausgang des Addierers 2 mit dem Eingang 4 des Integrators 1 und dessen Ausgang 5 mit einem Eingang des Multiplizierers 3 verbunden sind, und der Ausgang des Multiplizierers 3 ist hier über eine Stufe 10, die eine Vorzeichenumkehr bewirkt, mit einem Eingang des Addierers 2 verbunden. Der zweite Eingang des Multiplizierers 3 ist mit dem ersten Eingangsanschluß 7 für das erste Eingangssignal x gekoppelt, und der zweite Eingang des Addierers 2 ist mit dem zweiten Eingangsanschluß 8 für das zweite Eingangssignal y gekoppelt. Der Ausgang 5 des Integrators 1 ist ferner mit dem Ausgangsanschluß 9 für das Ausgangssignal z gekoppelt.

Wie aus Fig. 1 erkennbar, sind die drei Elemente, nämlich der Integrator 1, der Multiplizierer 3 und der Addierer 2, in einer geschlossenen Signalschleife angeordnet. Dadurch tendiert das Signal e am Eingang 4 des Integrators 1 gegen Null

$$e = y - x \cdot z = 0$$

Daraus folgt

$$z = y/x$$

Im eingeschwungenen Zustand ist also der Signalwert z am Ausgangsanschluß 9 gleich dem Quotienten der Signalwerte Y und X an den Eingängen 7 und 8. Dabei wird für den Fall, daß die Eingangssignale den vollen Wertebereich überstreichen, vorausgesetzt, daß $y \leq x$ ist. Außerdem können x und y ebenso wie damit z nur positive Werte annehmen. Diese Bedingungen stellen insbesondere bei der Signalverarbeitung jedoch allgemein keine wesentlichen Einschränkungen dar.

Die Stufe 10 zur Vorzeichenumkehr kann auch wegfallen, wenn der Multiplizierer 3 so aufgebaut ist, daß er unmittelbar das negative Produkt liefert, oder wenn der Addierer 2 als Subtrahierer geschaltet wird. Letzteres ist zweckmäßig, wenn die Schaltung durch einen digitalen Signalprozessor realisiert wird.

Die in Fig. 2 dargestellte Realisierung des Integrators 1 enthält einen weiteren Addierer 11, dessen einer Eingang mit dem Eingang 4 des Integrators 1 und dessen anderer Eingang mit dem Ausgang 5 des Integrators 1 verbunden ist. Der Ausgang des Addierers 11 führt auf eine taktgesteuerte Speicherstufe 12, die mit jedem Taktsignal, das über den Eingang 6 zugeführt wird, den vom Addierer 11 abgegebenen Dualwert einspeichert und am Ausgang abgibt. Die Speicherstufe 12 bewirkt also eine Verzögerung um eine Zeitspanne T, wenn 1/T die Frequenz des Taktsignals ist. Dabei wird angenommen, daß der Addierer 11 die einzelnen Binärsignale oder Bits des Dualwertes parallel abgibt. Die Speicherstufe 12 enthält eine Anzahl Speicherelemente entsprechend der Anzahl Binärstellen des Dualwertes. Grundsätzlich ist es jedoch auch möglich, die einzelnen Binärstellen des Dualwertes nacheinander zu verarbeiten, wobei die Speicherstufe 12 dann als Schieberegister ausgeführt sein kann, jedoch verlängert sich dann die Zeitkonstante des Integrators 1 um die Stellenzahl des Dualwertes.

Die Einschwingzeit der Schaltung nach Fig. 1 bis zur Erreichung des Endwertes innerhalb einer vorgegebenen Genauigkeit hängt nicht nur von der Zeitkonstante des Integrators 1, d.h. von der Taktfrequenz der taktgesteuerten Speicherstufe darin ab, sondern auch von den Werten der Eingangssignale x und y. Dieses Einschwingen dauert am längsten, wenn $x \approx y$ ist und wenn x, $y \approx 0$ sind. Wenn x wesentlich verschieden von y ist, wird ein genaues Ergebnis auch für Dualwerte mit einer großen Anzahl von Stellen, beispielsweise 18 Stellen, nach wenigen Taktzyklen erreicht. Grundsätzlich brauchen die Eingangssignale x und y also keine stationären Signale sein, sondern es sind auch langsam sich verändernde Signale zulässig, wenn die höchste in diesen Signalen auftretende Frequenz genügend niedrig gegenüber der Zeitkonstanten des Integrators, d.h. der Taktfrequenz der Speicherstufe darin ist. Dies gilt besonders, wenn die Amplitude dieser höchsten Frequenz sehr gering ist und wenn die Signalwerte selbst genügend groß und genügend unterschiedlich sind.

**Patentansprüche**

1. Schaltungsanordnung zum Erzeugen eines Ausgangssignals (z) an einem Ausgangsanschluß (9), das im wesentlichen dem Quotienten eines ersten und eines zweiten Eingangssignals (x, y) an einem ersten und einem zweiten Eingangsanschluß (7, 8) entspricht, mit einem Multiplizierer (3), von dem ein erster Eingang mit dem ersten Eingangsanschluß (7) und ein zweiter Eingang mit dem Ausgangsanschluß (9) gekoppelt ist, und einer Kombinierstufe mit zwei Eingängen, von denen der eine Eingang mit einem Ausgang des Multiplizierers und der andere Eingang mit dem zweiten Eingangsanschluß (8) gekoppelt ist zum Bilden der Differenz zwischen den Signalen an beiden Eingängen, dadurch gekennzeichnet, daß die Kombinierstufe als ein erster Addierer (2) ausgebildet ist, dessen Ausgang mit einem Eingang (4) eines Integrators (1) verbunden ist, wobei ein Ausgang (5) des Integrators mit dem Ausgangsanschluß (9) gekoppelt ist.

2. Schaltungsanordnung nach Anspruch 1, wobei das Ausgangssignal und die Eingangssignale durch mehrere Binärsignale dargestellte Dualwerte sind, dadurch gekennzeichnet, daß der Integrator (1) einen zweiten Addierer (11), von dem ein erster Eingang mit dem Eingang (4) des Integrators und ein zweiter Eingang mit dem Ausgang (5) des Integrators verbunden ist, und einen taktgesteuerten Speicher (12) zur Aufnahme der Binärsignale eines Dualwertes enthält, von dem ein Eingang mit einem Ausgang des zweiten Addierers (11) und ein Ausgang mit dem Ausgang (5) des Integrators verbunden ist.

FIG. 1

FIG. 2

Europäisches Patentamt

**EUROPÄISCHER RECHERCHENBERICHT**

Nummer der Anmeldung

EP 94 20 2671

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-3 652 930 (SUGIYAMA ET AL) <br> * Spalte 2, Zeile 14 - Zeile 38; Abbildung 1 * | 1,2 | G06F7/52 |
| A | DE-A-38 32 796 (TOSHIBA) <br> * Abbildung 6 * | 1,2 | |
| A | 19-th Asilomar Conference on Circuits, Systems & <br> Computers, Nov. 6-8, 1985, Calif., pp. 192-196; <br> Millis, Jr.: 'Parallel-by-bit arithmetic compu- <br> tational techniques' <br> * Abbildung 4 * | 1,2 | |
| | | | **RECHERCHIERTE SACHGEBIETE (Int.Cl.6)** |
| | | | G06F |

Der vorliegende Recherchenbericht wurde für alle Patentansprüche erstellt

| Recherchenort | Abschlußdatum der Recherche | Prüfer |
|---|---|---|
| DEN HAAG | 2. Dezember 1994 | Cohen, B |